# DEMANDE DE BREVET EUROPEEN

(11) **EP 4 616 773 A1**
(43) Date de publication de la demande: **17.09.2025**
(21) Numéro de dépôt: 24305400.4
(22) Date de dépôt: 15.03.2024
(51) Int. Cl.: A47J 37/06

(54) **APPAREIL DE CUISSON, KIT DE CUISSON ET PROCÉDÉ DE FABRICATION D'UN TEL APPAREIL**

(71) Demandeur: KitchenChef, 13290 Aix-en-Provence (FR)
(72) Inventeur: COSSETTINI, Sylvain, 13290 Aix-En-Provence (FR); DARQUES, Jean-Baptiste, 13290 Aix-En-Provence (FR)
(74) Mandataire: Tranvouez, Edern Morgan

(57) **Abrégé**

La présente invention concerne un appareil de cuisson (100) pour cuire des aliments contenus dans au moins un récipient (200) de cuisson comprenant : au moins un système de chauffage (110) radiant ; au moins un premier élément de support (120) conformé pour supporter le ou les récipients (200) pendant la cuisson des aliments ; au moins un premier et un deuxième montants latéraux (131,132) agencés parallèle l'un à l'autre et sur lesquels sont montés le système de chauffage (110) et l'au moins un premier élément de support (120). Le premier et le deuxième montant latéral (131, 132) comprennent chacun au moins un premier organe d'appui (135, 136) sur lequel l'au moins un premier élément de support (120) est en appui.

## Description

### Domaine technique

L'invention concerne le domaine des équipements de cuissons et en particulier les équipements de cuisson radiante.

L'invention a ainsi plus particulièrement pour objet un appareil de cuisson, un kit de cuisson et un procédé de fabrication d'un tel appareil.

### État de l'art antérieur

Les dispositifs de cuisson pour cuire des aliments contenus dans des récipients de cuisson, tels que les appareils à raclette, comprennent généralement :
- un système de chauffage radiant, tel qu'une résistance électrique,
- un élément de support conformé pour supporter le ou les récipients pendant la cuisson des aliments, l'élément de support étant agencé en regard du système de chauffage de telle manière que le ou les récipients et les aliments qui y sont contenus, supportés par ledit au moins un premier élément de support puissent être soumis au système de chauffage radiant,
- au moins un premier et un deuxième montant latéral agencés parallèles l'un à l'autre et sur lesquels sont montés le système de chauffage et l'au moins un premier élément de support.

L'élément de support et le système de chauffage sont généralement fixés aux premier et deuxième montants latéraux, par exemple aux moyens de vis, de manière en les rendre solidaires de ces derniers. De cette manière, on s'assure de la solidité de l'appareil.

Si cette solution est adaptée pour l'utilisation de l'appareil de cuisson, elle présente l'inconvénient d'une fabrication de l'appareil relativement complexe et de rendre l'intervention sur ces appareils de cuisson relativement difficile. En effet, la présence de l'élément support rend l'accès à la surface interne des montants latéraux de ces appareils difficiles. Or, en cas d'intervention sur l'appareil, cet accès est souvent nécessaire pour permettre le dévissage d'un habillage de ces montants.

### Exposé de l'invention

L'invention vise à remédier à l'inconvénient ci-dessus et a ainsi pour but de fournir un appareil de cuisson qui facilite les interventions sur l'appareil.

L'invention concerne à cet effet, un appareil de cuisson pour cuire des aliments contenus dans au moins un récipient de cuisson comprenant :
- au moins un système de chauffage radiant, tel qu'une résistance électrique,
- au moins un premier élément de support conformé pour supporter le ou les récipients pendant la cuisson des aliments, le premier élément de support étant agencé en regard du système de chauffage de telle manière que le ou les récipients, et les aliments qui y sont contenus, supportés par ledit au moins un premier élément de support puissent être soumis au système de chauffage,
- au moins un premier et un deuxième montant latéral agencés parallèles l'un à l'autre et sur lesquels sont montés le système de chauffage et l'au moins un premier élément de support,
le premier et le deuxième montant latéral comprennent chacun au moins un premier organe d'appui sur lequel l'au moins un premier élément de support est en appui, ledit au moins un premier élément de support présentant pour chaque au moins un premier organe d'appui une zone d'appui complémentaire en forme audit au moins un premier organe d'appui.

Un tel agencement du premier élément de support en appui des premiers organes du premier et du deuxième montant permet un retrait aisé du premier élément et donc un accès facilité à la surface interne du premier et du deuxième montant. Cet accès facilité favorise le démontage de l'appareil et donc l'intervention sur l'appareil de cuisson selon l'invention.

De plus, le premier élément de support n'ayant pas à être vissé, l'appareil selon l'invention permet de limiter le nombre de vis nécessaire facilitant ainsi à la fois pour le montage et le démontage de l'appareil de cuisson. Du fait de ce nombre de vis réduit, l'impact écologique de l'appareil de cuisson selon l'invention en est réduit vis-à-vis de ceux de l'art antérieur.

Selon l'invention, le premier élément de support est agencé en appui avec les organes d'appui aux moyens des zones d'appui. Ainsi le premier élément de support ne présente pas de moyen de fixation et le maintien en place, du type amovible, est assuré par la complémentarité en forme entre les organes d'appui et les zones d'appui. Un tel agencement en appui, n'exclut, bien entendu, pas la présence d'un éventuelle élément de maintien, tel qu'un système d'encliquetage, permettant de sécuriser le premier élément de support sur les organes d'appui ceci sans affecter le fait que le premier élément ne présente pas de fixation non amovible vis-à-vis des organes d'appui et donc des montants latéraux.

le premier et le deuxième montant latéral peuvent comprendre chacun en outre un deuxième organe d'appui sur lequel l'au moins un premier élément de support est en appui, ledit au moins un premier élément de support présentant pour chacun desdits deuxième organes d'appui une zone d'appui complémentaire en forme dudit deuxième organe d'appui. Un tel deuxième organe permet un agencement stable du premier élément de support sur les montants latéraux. De cette manière, on limite les risques de déstabilisation du premier élément de support lors de la mise en place des récipients de cuisson.

Au moins l'un du premier et du deuxième organe d'appui peut être commun entre le premier et le deuxième montant latéral et est formée par une traverse.

Avec une telle mise en commun et l'utilisation d'une traverse, le maintient en place du premier élément de support se fait sur toute sa longueur. Ainsi, le premier élément de support peut être maintenu de manière stable et les risques de déstabilisation du premier élément de support sont réduits.

Au moins un organe d'appui sélectionné parmi le premier et le deuxième organe d'appui du premier et du deuxième montant latéral, peut présenter une section, selon un plan sensiblement parallèle au montant latéral correspondant, comprenant une portion de cercle, ladite portion correspondant préférentiellement à un demi-cercle, voire à un cercle complet.

Avec une telle section comprenant une portion de cercle, ledit organe d'appui et la zone d'appui correspondante offre une fonction d'auto-centrage du premier élément de support et facilite ainsi l'installation du premier élément de support sur les montants latéraux.

Au moins un organe sélectionné parmi le premier et le deuxième organe d'appui du premier et du deuxième montant latéral peut présenter une section, selon un plan sensiblement parallèle au montant correspondant, en parallélogramme, voire rectangulaire ou encore carrée.

Avec une telle section en parallélogramme permet au premier et au deuxième organe d'appui de fournir un positionnement particulièrement stable du premier élément de support vis-à-vis des montants latéraux.

Le premier et le deuxième organe d'appui de chaque premier et deuxième montant latéral peuvent être reliés l'un à l'autre par un élément de cadre.

Un tel élément cadre permet d'obtenir une bonne répartition du poids du premier élément de support sur les montants latéraux puisque cette répartition se fait sur les premier et deuxième organes d'appui et l'élément de cadre.

Chacun de l'au moins un premier organe d'appui s'étend latéralement sur au moins une moitié de la largeur du montant latéral.

De cette manière, chaque premier organe d'appui fourni une surface d'appui relativement importante pour le premier élément de support autorisant ainsi un maintien stable de ce dernier sur les montants latéraux.

Pour le premier et le deuxième montant latéral au moins un organe d'appui parmi le premier organe d'appui et l'éventuel deuxième organe d'appui est indépendant dudit organe d'appui correspondant de l'autre montant parmi le premier et deuxième montant latéral, l'au moins un organe d'appui parmi le premier organe d'appui et l'éventuel deuxième organe d'appui étant de manière particulièrement avantageuse formé par embossage d'une paroi du montant latéral correspondant.

Une telle indépendance de l'au moins un organe d'appui parmi le premier organe d'appui et l'éventuel deuxième organe d'appui permet audit organe de laisser libre l'espace entre le premier et le deuxième montant latéral. De cette manière, ledit organe d'appui ne limite en rien l'accès aux premier et deuxième montants latéraux et au système de chauffage en cas d'intervention sur l'appareil de cuisson.

L'au moins un premier élément support peut comprendre une première surface de support conformée pour supporter le ou les récipients pendant la cuisson des aliments et une deuxième surface de stockage conformée pour supporter le ou les récipients en dehors des périodes de cuisson,
la deuxième surface de stockage présentant préférentiellement les zones d'appui.

Une telle deuxième surface de stockage permet de stocker les récipients de cuisson en dehors des périodes de chauffe. De ce fait, lorsque les récipients de cuisson non utilisés y sont stockés, les utilisateurs de l'appareil de cuisson ont tout le loisir d'utiliser les places laissées libres par ce stockage. De plus, les récipients qui sont stockés au niveau de la surface de stockage ne présentent pas leur contenu chauffé. Cela évite que les salissures ou autres résidus de cuisson qui pourraient se trouver dans lesdits récipients de cuisson puisse être carbonisés.

L'au moins un premier élément de support peut comprendre un élément de liaison conformé pour lier l'un à l'autre la première surface de support et la deuxième surface de stockage.

Avec un tel élément de liaison entre la première surface de support et la deuxième surface de stockage qui permet de les rendre solidaires l'une à l'autre, la manipulation de ces dernières est facilitée.

L'appareil de cuisson peut comprendre en outre un deuxième élément support conformé pour supporter le ou les récipients en dehors des périodes de cuisson,
chaque premier et deuxième montant présentant au moins un troisième organe d'appui sur lequel le deuxième élément de support est en appui, ledit deuxième élément de support présentant pour chaque troisième organe d'appui une zone d'appui complémentaire en forme audit troisième organe d'appui.

Un tel deuxième élément support permet de stocker les récipients de cuisson en dehors des périodes de chauffe. De ce fait, lorsque les récipients de cuisson non utilisés y sont stockés, les utilisateurs de l'appareil de cuisson ont tout le loisir d'utiliser les places laissées libres par ce stockage. De plus, les récipients qui sont stockés au niveau de ce deuxième élément support ne présentent pas leur contenu chauffé. Cela évite que les salissures ou autres résidus de cuisson qui pourraient se trouver dans lesdits récipients de cuisson puisse être carbonisés.

L'au moins un premier élément de support peut comprendre une plaque présentant deux chants opposés s'étendant transversalement vis-à-vis du reste de la plaque, lesdits chants opposés présentant chacun au moins une ouverture formant les zones d'appui pour les premier et deuxième organes d'appui du montant latéral respectif.

L'appareil de cuisson peut comprendre en outre au moins un capteur adapté pour détecter lorsque le premier élément de support est agencé en appui avec un premier organe d'appui d'au moins l'un parmi le premier et le deuxième montant latéral et dans lequel l'appareil de cuisson est en outre configuré pour éteindre le système le chauffage en l'absence de détection par l'au moins un capteur de l'agencement du premier élément de support en appui avec un premier organe d'appui d'au moins l'un parmi le premier et le deuxième montant latéral,
dans lequel l'au moins un capteur comprend préférentiellement un interrupteur qui est agencé de de telle manière à être :
- en une première position lorsque le premier élément de support (120) est agencé en appui avec le premier organe d'appui d'au moins l'un parmi le premier et le deuxième montant latéral et,
- en une deuxième position en en l'absence d'un tel appui du premier élément de support avec le premier organe d'appui d'au moins l'un parmi le premier et le deuxième montant latéral,
ledit interrupteur étant conformé pour autoriser l'alimentation du système de chauffage uniquement lorsqu'il est dans la première position.

Un tel capteur permet de protéger la surface supportant l'appareil en cas de retrait du premier élément de support. En effet, selon certaine configuration de l'invention, lorsque le premier élément de support est retiré, la surface supportant l'appareil de cuisson peut être directement soumise au rayonnement du système de chauffage. Or, une telle soumission, notamment lorsque cette surface est inflammable, est à l'origine d'un risque d'incendie ou de brulure pour les utilisateurs de tels appareils de cuisson. Ainsi, un tel capteur permettant d'éteindre le système de chauffage en l'absence du premier élément de support supprime totalement ces risques.

L'invention concerne en outre un Kit de cuisson d'aliments comprenant :
- un dispositif de cuisson selon l'invention,
- au moins un récipient de cuisson destiné à contenir des aliments à cuire.

Un tel kit, en comprenant un appareil de cuisson selon l'invention, bénéficie des avantages qui y sont associés.

L'invention concerne en outre un procédé de fabrication d'un appareil de cuisson pour cuire des aliments contenus dans au moins un récipient (200) de cuisson, le procédé comprenant les étapes suivantes :
- fourniture d'au moins un système de chauffage radiant, tel qu'une résistance électrique,
- fourniture d'au moins un premier élément de support conformé pour supporter le ou les récipients pendant la cuisson des aliments,
- fourniture d'au moins un premier et un deuxième montant latéral agencés parallèle l'un à l'autre,
- montage du système de chauffage sur les premier et deuxième montants latéraux,
- fourniture pour chacun des premier et deuxième montants latéraux d'au moins un premier et organe d'appui, l'au moins un premier élément de support présentant pour chaque premier organe d'appui une zone d'appui complémentaire en forme audit premier organe d'appui,
- agencement l'au moins un premier élément de support en appui de chacun des au moins un premier organe d'appui, le premier élément de support étant alors agencé en regard du système de chauffage de telle manière que le ou les récipients, et les aliments qui y sont contenus, qui sont supportés par ledit au moins un premier élément de support puissent être soumis au système de chauffage.

Un tel procédé permet la fabrication d'un appareil de cuisson selon l'invention et de bénéficier, pour ledit appareil de cuisson des avantages associés.

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 illustre en vue en perspective un kit de cuisson comprenant un appareil de cuisson selon un premier mode de réalisation de l'invention et deux récipients de cuisson, ledit appareil de cuisson présentant un premier et un deuxième organe d'appui formé par respectivement une première et une deuxième tige,
- les figures 2A et 2B illustrent respectivement une vue de côté et une vue en éclaté de l'appareil de cuisson du kit de la figure 1,
- la figure 3 est une vue en perspective d'un premier élément de support de l'appareil de cuisson illustré sur les figures 1 à 2B,
- la figure 4 illustre selon une vue en éclaté un appareil de cuisson selon un deuxième mode de réalisation dans lequel le premier et le deuxième organe d'appui sont formés par respectivement une première et deuxième traverse de section carrée qui sont reliées l'une à l'autre par un élément de cadre,
- les figures 5A et 5B illustrent selon une vue en éclaté et une vue en coupe latérale un appareil de cuisson selon un troisième mode de réalisation dans lequel le premier et le deuxième organe d'appui sont des ergots formés par embossage et dans lequel il est prévu un deuxième élément de support vissé sur les premier et deuxième montant,
- la figure 6 illustre selon une vue en éclaté un appareil de cuisson selon un quatrième mode dans lequel il est prévue pour chaque montant un unique organe d'appui s'étendant sur une partie de la largeur dudit montant.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

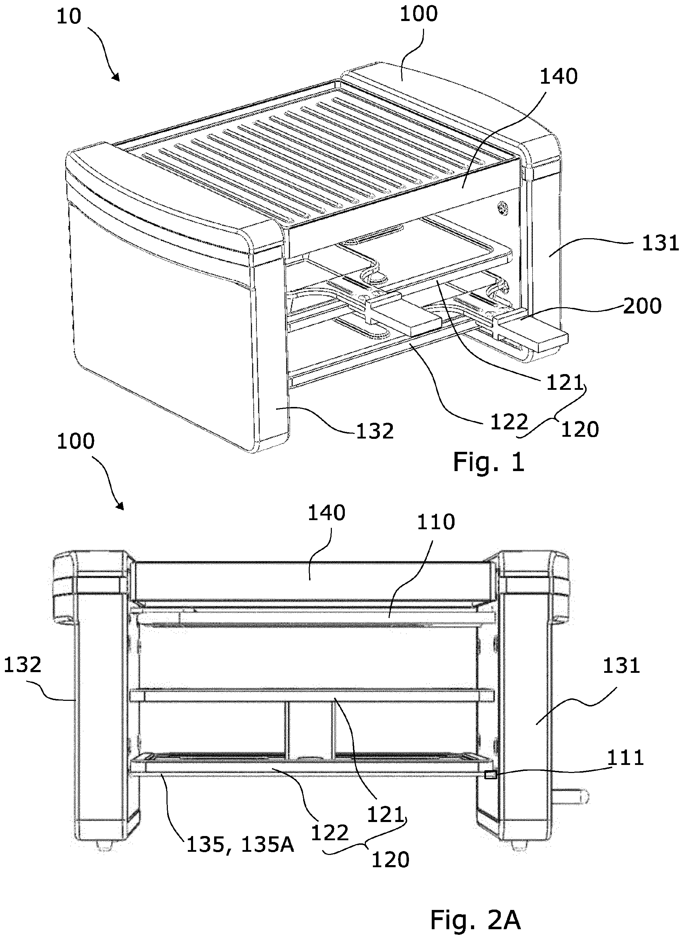

La figure 1 illustre un kit de cuisson 10 comprenant un appareil de cuisson selon l'invention 100 et des récipients de cuisson 200, ledit appareil de cuisson 100 présentant un accès facilité à des premier et deuxième montants latéraux 131, 132 de l'appareil de cuisson 100 par la possibilité de retrait d'un élément support 120 qu'il autorise.

On notera que si dans le cadre de la présente description de l'invention, l'appareil de cuisson est un appareil à raclette et les récipients 200 de cuisson sont des poêlons, l'invention ne se limite pas à ce seul type de kit de cuisson et couvre l'ensemble des kits de cuisson conviviale basé sur une cuisson radiante par le dessus des récipients.

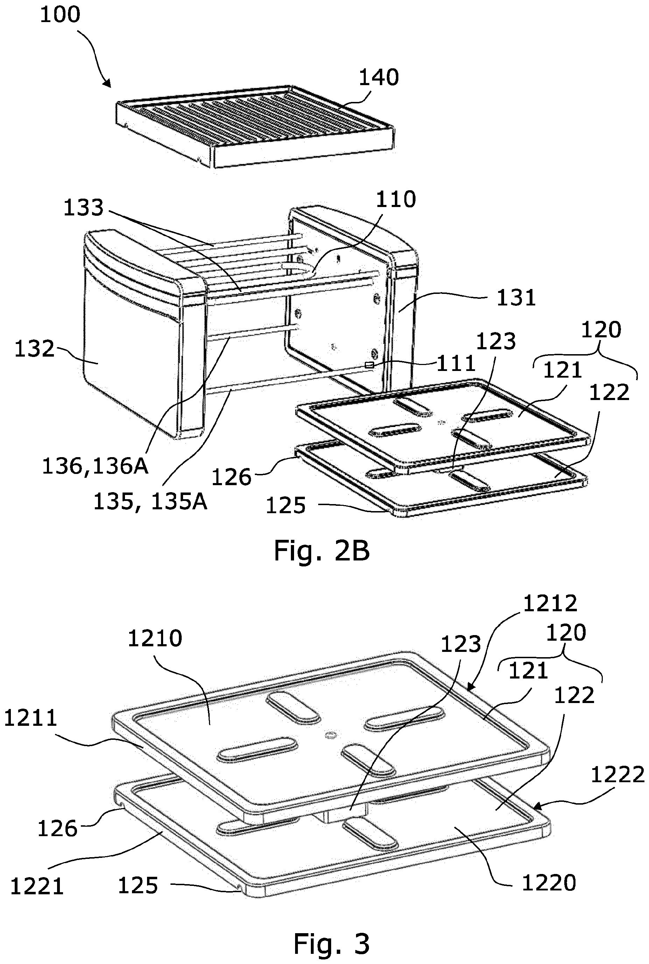

Comme montré sur les figures 2A et 2B, un tel appareil de cuisson 100 comprend :
- un système de chauffage 110 radiant, tel qu'une résistance électrique,
- le premier élément de support 120 conformé pour supporter le ou les récipients 200 pendant la cuisson des aliments, le premier élément de support 120 étant agencé en regard du système de chauffage 110 de telle manière que le ou les récipients 200, et les aliments sui y sont contenus, supportés par ledit au moins un premier élément de support puissent être soumis au système de chauffage 110,
- un premier et un deuxième montant latéral 131, 132 agencés parallèles l'un à l'autre et sur lesquels sont montés le système de chauffage 110 et l'au moins un premier élément de support 120,
- une plaque de chauffage 140 agencée en regard du système de chauffage à l'opposé du premier élément de support 120,
- un capteur 111 adapté pour détecter lorsque le premier élément de support 120 est agencé en appui avec le premier organe d'appui 135 du premier et du deuxième montant latéral 131, 132.

Conformément à l'invention, le premier et le deuxième montant latéral 131, 132 comprennent chacun un premier et un deuxième organe d'appui 135, 136, qui est dans le présent mode de réalisation commun, sur lesquels le premier élément de support 120 est en appui. Le premier élément de support 120 présent pour chacun du premier et du deuxième organe d'appui 135, 136 une zone d'appui 125, 126 complémentaire en forme audit premier et deuxième organe d'appui 135, 136.

Le système de chauffage 110 est dans le cadre de ce premier mode de réalisation une résistance électrique. Selon une configuration d'une telle résistance électrique, le système de chauffage 110 présente une forme en serpentin qui s'étend pour une première direction, transversalement aux premier et deuxième montant 131, 132, et pour une deuxième direction, latéralement à ces même premier et deuxième montant 131, 132, de manière à recouvrir sensiblement l'intégralité d'une surface du premier élément de support 120. Bien entendu, si l'utilisation d'une telle résistance électrique en tant que système de chauffage radiant est une option usuelle pour les appareils de cuisson, le système de chauffage 110 peut être autre, tel qu'une ou plusieurs lampes infrarouges, sans que l'on sorte du cadre de l'invention.

Le système de chauffage 110 est monté sur les premier et deuxième montants latéraux 131, 132, par exemple et comme montré sur la figure 2B, en s'étendant à partir de l'un du premier et du deuxième montant latéral 131, 132, ici le premier montant latéral 131. Les premier et deuxième montants latéraux 131, 132 sont agencés parallèlement l'un à l'autre. Afin d'assurer un tel agencement, l'appareil de cuisson 100 peut en outre comporter deux éléments de structure 133, ou entretoises, agencés de part et d'autre du système de chauffage 110. De cette manière, dans une configuration d'utilisation de l'appareil de cuisson 100, le système de chauffage 110 et les éléments de structure 133 se trouvent sur une partie haute des premier et deuxième montants latéraux 131, 132 alors que le premier élément de support est agencé sur une partie médiane, voire basse de ces mêmes montants latéraux 131, 132.

Comme cela est visible sur la figure 2B, les premier et deuxième montants latéraux 131, 132, présentent chacun une surface intérieure destinée à être en regard de l'autre montant latéral 131, 132, et un habillage destiné à recouvrir des parties fonctionnelles de l'appareil de cuisson 100 tout en autorisant un accès à des moyens de commande de ce dernier, tels qu'un interrupteur marche arrêt ou encore un réglage de puissance du système de chauffage 110. Ainsi les montants latéraux 131, 132 peuvent loger entre la surface intérieure et l'habillage, une électronique de commande et régulation du système de chauffage et des systèmes de sécurisation, notamment électrique, de l'appareil de cuisson 100.

On peut voir sur la figure 2B, pour chacun du premier et du deuxième montant latéral 131, 132, la surface interne et l'habillage sont reliés l'un à l'autre au moyen de quatre vis.

Ainsi, le montage du premier élément de support 120 en appui sur les organes d'appui 135, 136 permet, de par le retrait de ce premier élément de support 120, un accès aisé aux vis reliant l'habillage et la surface interne des premier et deuxième montants latéraux. En raison de cet accès facilité, les interventions sur l'appareil de cuisson 100 sont facilitées vis-à-vis des appareils de l'art antérieur pour lesquels il est nécessaire de dévisser le premier élément de support 120. De même, la possibilité de retrait facilité du premier élément de support facilite son nettoyage et celui des surfaces internes du premier et du deuxième montants 131, 132.

Afin de permettre un agencement stable de l'appareil de cuisson, les premier et deuxième montants latéraux 131, 132 peuvent également comprendre des pieds positionnés sensiblement à l'opposé du système de chauffage.

De même, afin d'offrir une option supplémentaire des éléments, la plaque de chauffage 140 est agencée en regard du système de chauffage 110 supporté par les deux éléments de structure 133. De cette manière, en plus de la cuisson permise les récipients supportés par le premier élément de support 120, les utilisateurs sont à même de réchauffer d'autres aliments en les plaçant sur la plaque de chauffage 140.

Dans le présent mode de réalisation, les premier et deuxième montants latéraux 131, 132 comprennent le premier et le deuxième organe d'appui 135, 136 qui sont communs et qui sont tous deux formés par une traverse 135A, 136A respective. Le premier et le deuxième organe d'appui 135, 136 présente une section, selon un plan sensiblement parallèle au montant latéral 131, 132 correspondants, comprenant une portion de cercle, ladite portion correspondant préférentiellement à un demi-cercle, voire à un cercle complet. Comme montré sur la figure 2B, dans le présent mode de réalisation, le premier et le deuxième organe d'appui 135, 136 présentent une section circulaire, c'est-à-dire une portion correspondant à un disque. Les premier et deuxième organes d'appui 135, 136, en fonction de leur diamètre, de la solidité recherchée, peuvent être plein ou présenter une forme tubulaire.

Comme montré sur la figure 3, dans ce premier mode de réalisation, le premier élément de support 120 comprend une première surface de support 121 conformée pour supporter le ou les récipients 200 pendant la cuisson des aliments et une deuxième surface de stockage 122 conformée pour supporter le ou les récipients 200 en dehors des périodes de cuisson. La première surface de support 121 et la deuxième surface de support 122 sont agencées parallèle l'une à l'autre. Un tel agencement est fourni au moyen d'un élément de liaison 123 conformé pour lier l'un à l'autre la première surface de support 121 et la deuxième surface de stockage 122.

Chacune de la première surface de support 121 et de la deuxième surface de stockage 122 peut être fournie sous la forme d'une plaque 1210, 1220 présentant deux chants opposés 1211, 1212, 1221, 1222 s'étendant transversalement vis-à-vis du reste de la plaque 1210, 1220. Afin de permettre la formation d'espaces dédiés à l'accueil des récipients, les plaques peuvent être structurées, par exemple par emboutissage, afin de former une cuvette et des nervures de séparation. On peut ainsi voir sur la figure 3, que la première surface de support 121 présente une cuvette et quatre nervures délimitant quatre espaces d'accueil pour les récipients.

Bien entendu, si dans le présent mode de réalisation, l'appareil de cuisson 100 est adapté pour accueillir quatre récipients 200 de cuisson, il est parfaitement envisageable, ceci sans que l'on sorte du cadre de l'invention, que celui-ci soit adapté pour un nombre de récipients 200 différents, par exemple deux, six voire 8, ceci sans que l'on sorte du cadre de l'invention. Dans ce cas, le premier élément de support 120 peut présenter une surface de support 121 adaptée à ce nombre de récipients 200.

Dans le présent mode de réalisation, les chants opposés 1221, 1222 de la deuxième surface de stockage 122 présentent chacun au moins une ouverture formant les zones d'appui 125, 126 pour les premier et deuxième organes 135, 136 du montant latéral 130, 131 respectif.

Bien entendu, il est parfaitement envisageable, en variante, que ce soit les champs opposés 1211, 1212 de la première surface de support qui présentent les zones d'appui 124, 126 pour les premier et deuxième organes d'appui 135, 136 du montant latéral 130, 131 respectifs.

Afin de parfaire la sécurisation de l'appareil de cuisson 100 selon l'invention, celui-ci peut comprendre, comme montré sur les figures 2A et 2B, le capteur 111 adapté pour détecter lorsque le premier élément de support 120 est agencé en appui avec le premier organe d'appui 135 du premier et deuxième montant latéral 131, 132. Selon cette possibilité, l'appareil de cuisson 100 est configuré pour éteindre le système le chauffage 110 en l'absence de détection par le capteur 111 de l'agencement du premier élément de support 120 en appui avec un premier organe d'appui 135 du premier et le deuxième montant latéral 131, 132.
Selon un exemple de configuration tel que montré sur les figures 2A et 2B, le premier capteur peut comprendre interrupteur agencé de de telle manière à être :
- dans une position fermée lorsque le premier élément de support 120 est agencé en appui avec le premier organe d'appui 135 de premier et le deuxième montants latéraux 131, 132 et,
- dans une position ouverte en en l'absence d'un tel appui du premier élément de support 120 avec le premier organe d'appui 135 des premier et le deuxième montants latéraux 131, 1322. Ledit interrupteur est conformé pour autoriser l'alimentation du système de chauffage 110 uniquement lorsqu'il est dans la position fermé.

Ainsi selon cet exemple, l'interrupteur peut être agencé entre le circuit d'alimentation du système de chauffage 110 et le système de chauffage 110 lui-même de manière à couper l'alimentation du système de chauffage 110 lorsqu'il est en position ouverte. Pour ce faire, le présent interrupteur peut être un interrupteur monostable dans la position ouverte, ledit interrupteur étant agencé au niveau du premier organe d'appui 135 de tel manière que lorsque le premier élément de support 120 appui du premier élément support 120 sur le premier organe d'appui 135 le premier élément support 120 appui également sur l'interrupteur et que le poids du premier élément support 120 soit suffisant pour le maintenir dans la position fermée. Ainsi, en l'absence de l'appui du premier élément support 120 sur ledit interrupteur, i.e. le capteur 111, l'interrupteur est en position ouverte et coupe l'alimentation du système de chauffage 110.

On notera également que si le présent capteur 111 est illustré uniquement en lien avec le premier mode de réalisation et qu'aucune mention d'un tel capteur 111 n'est faite dans les modes de réalisation ci-après, cela est uniquement par souci de concision. Bien entendu, les appareils de cuisson 100 selon les deuxième au quatrième modes de réalisation décrits ci-après sont parfaitement aptes à comporter un tel capteur 111 et, du moins pour les appareils de cuisson 100 selon le deuxième et le quatrième mode de réalisation, et en comprend préférentiellement au moins un afin d'en améliorer la sécurisation des utilisateurs. De manière identique, si dans le présent mode de réalisation, le capteur 111 est un interrupteur équipant le premier organe d'appui 135, celui-ci peut être d'un autre type, par exemple un capteur capacitif ou un capteur optique apte à détecter la présence ou non du premier élément support 120, ou être positionné autrement qu'au niveau du premier organe d'appui 135, par exemple sur le deuxième organe d'appui ou l'un du premier et du deuxième montant latéral 131, 132, ceci sans que l'on sorte du cadre de l'invention.

Ainsi, par exemple, dans le cadre du présent mode de réalisation, dans le cas où les traverses 135A, 136A formants les premier et deuxième organes d'appui 135, 136 sont fournis sous une forme tubulaire, il est parfaitement envisageable que le capteur 111 soit logé dans l'un du premier et du deuxième organe d'appui 135, 136 au niveau d'une lumière ménagée dans ce dernier organe d'appui afin de permettre une sollicitation du capteur 111 lors de la mise en place du premier élément de support 120. Selon cette possibilité, non montrée, le capteur 111 peut être à distance des premier et deuxième montants latéraux 131, 132.

Comme cela est déjà précisé en lien avec la figure 1, le présent appareil de cuisson forme, avec les récipients 200 de cuisson, un kit de cuisson 10, tel que par exemple un kit pour la cuisson de la raclette, l'appareil de cuisson 100 étant alors un appareil à raclette et les récipients des poêlons à raclette 200.

Un tel appareil de cuisson 100 peut être fabriqué à partir d'un procédé de fabrication comprenant les étapes suivantes :
- fourniture du système de chauffage 110 radiant, tel qu'une résistance électrique,
- fourniture du premier élément de support 120 conformé pour supporter le ou les récipients 200 pendant la cuisson des aliments,
- fourniture des premier et deuxième montants latéraux 131, 132 agencés parallèles l'un à l'autre,
- montage du système de chauffage 110 sur les premier et deuxième montants latéraux 131, 132,
- fourniture pour chacun des premier et deuxième montants latéraux 131, 132 du premier et du deuxième organe d'appui 135, 136, le premier élément de support 120 présentant pour chacun desdits premier et deuxième organes d'appui 131, 132 une zone d'appui 121, 122 complémentaire en forme audit premier ou deuxième organe d'appui 131, 132,
- agencement du premier élément de support 131, 132 en appui desdits premier et deuxième organes d'appui 131, 132, le premier élément de support 120 étant alors agencé en regard du système de chauffage 110 de telle manière que le ou les récipients, et les aliments qui y sont contenus, supportés par ledit au moins un premier élément de support puissent être soumis au système de chauffage 110.

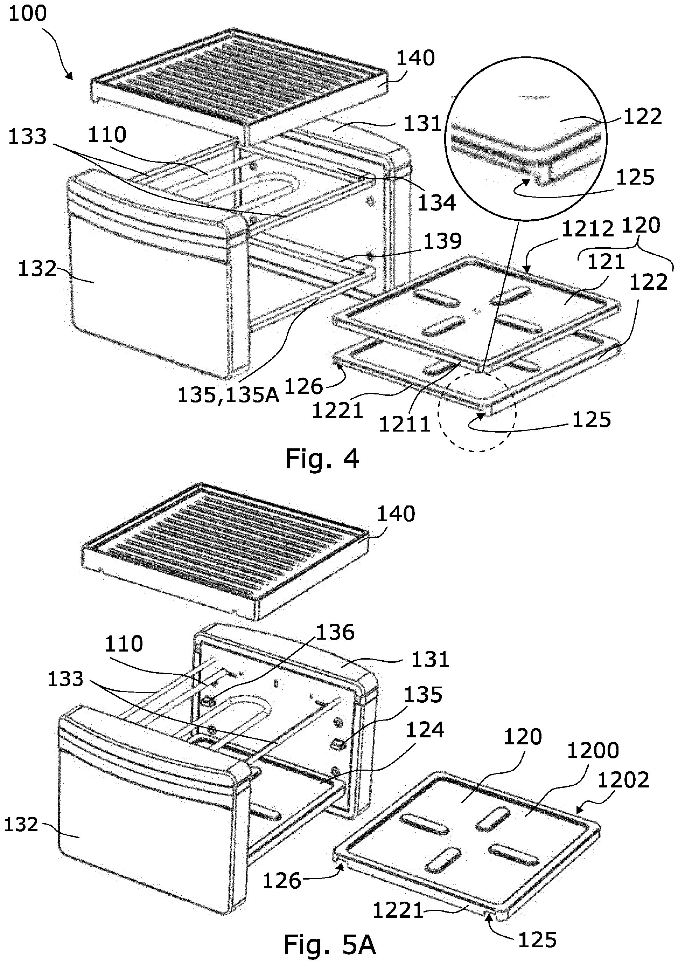

La figure 4 illustre un appareil de cuisson 100 selon un deuxième mode de réalisation de l'invention. Un tel appareil de cuisson selon ce deuxième mode de réalisation se différencie d'un appareil de cuisson selon le premier mode de réalisation en ce que les organes d'appui 135, 136 présentent une section carrée et sont reliés par un premier élément de cadre 139, et en ce qui les deux éléments de structure 133 sont également reliés par un deuxième élément de cadre 134.

Si dans le présent deuxième mode de réalisation les premier et deuxième organe d'appui 135, 136 sont formés par des traverses 135A, 136A présentant une section carrée, en variante, lesdites traverses 135A, 136A peuvent présenter des sections en parallélogramme ou rectangulaire sans que l'on sorte du cadre de l'invention.

Les premier et deuxième organe d'appui 135, 136 sont reliés l'un à l'autre au niveau du premier et du deuxième montant latéral 131, 132 par un premier et un deuxième élément de cadre 139. Selon cette possibilité, chaque élément de cadre 139 et les premier et deuxième organe d'appui 135, 136 qu'il relie, s'étend sur une partie de la largeur du montant latéral 131, 132 correspondant sur au moins une moitié de la largeur du montant latéral 131, 132. Dans le présent mode de réalisation, comme visible cette partie de la largeur du montant latéral 131, 132 est supérieure, voire supérieure ou égale, à 70%, voire 80% voire 90% de la largeur du montant latéral 131, 132.

Le premier élément de support 100 présente, comme montré sur la figure 4 et notamment l'agrandissement qui s'y trouve, sur les chants opposés 1221, 1222 de deuxième surface de stockage 1220 les zones d'appui 125, 126 qui sont fournies par une ouverture allongée s'étendant sur une partie majoritaire du chant opposé 1221, 1222 correspondant. Conformément à l'invention, cette ouverture allongée présente une forme complémentaire aux premier et deuxième organes d'appui 135, 136 correspondants et du premier élément de cadre 139 qui les relie.

Un appareil de cuisson 100 selon ce deuxième mode de réalisation peut être fabriqué à partir d'un procédé de fabrication qui se différencie d'un procédé de fabrication selon le premier mode de réalisation en ce que lors de l'étape de la fourniture du premier et du deuxième organe d'appui 135, 136, le premier et le deuxième organes d'appui 135, 136 présentent une section carrée et en ce qu'ils sont reliés par un premier élément de cadre 139 et les deux éléments de structure 133 sont également reliés par un deuxième élément de cadre 134.

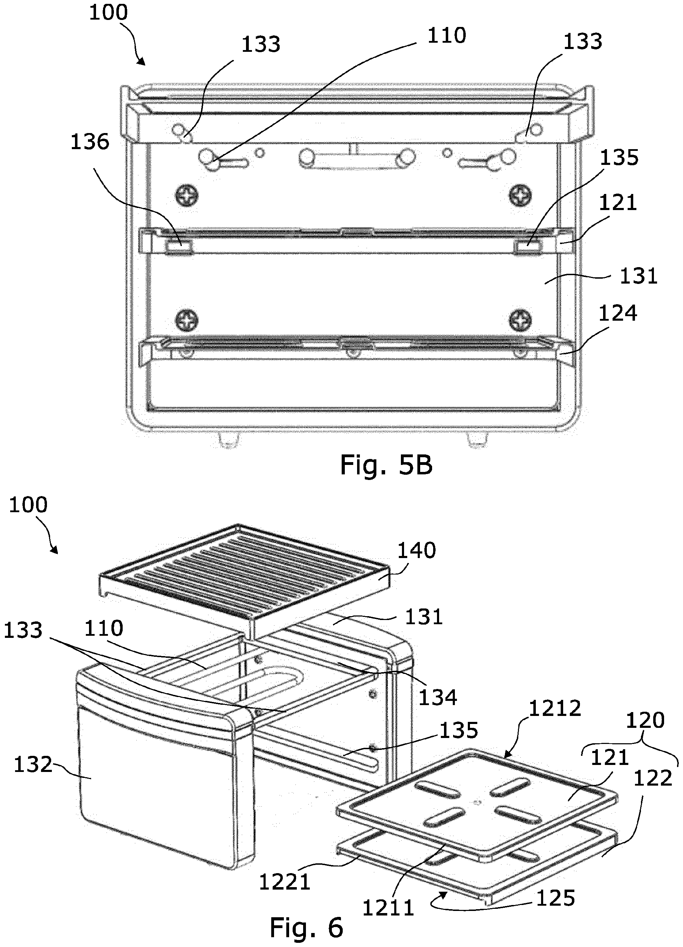

Les figure 5A et 5B illustrent un appareil de cuisson 100 selon un troisième mode de réalisation. Un tel appareil de cuisson 100 se différencie d'un appareil de cuisson 100 selon le premier mode de réalisation en ce que :
- Le premier élément de support 120 comprend uniquement une première surface de support 121 et ne comprend pas de deuxième surface de stockage 122,
- l'appareil de cuisson 100 comprend un deuxième élément support 124 conformé pour supporter le ou les récipients 200 en dehors des périodes de cuisson,
- le premier et le deuxième organe d'appui 135, 136 du premier montant latéral 131 sont indépendants des premier et deuxième organes d'appui du deuxième montant latéral et sont formés par embossages.

Ainsi, selon ce troisième mode de réalisation, le premier et deuxième montant 131, 132 présentent des premier et deuxième organes d'appui 135, 136 sous la forme d'ergots faisant saillie de la surface interne desdits premier et deuxième montants 131, 132. De tels premier et deuxième organes d'appui 135, 136 peuvent être formés par embossage de la surface interne. En variante, les organes d'appui 135, 136 peuvent être fixés à la surface interne du montant latéral 131, 132, parexemple par vissage, par encliquetage ou montage en force.

Le premier élément de support 120 dans ce premier mode de réalisation comprend uniquement la premier surface support 121 et se présente sous la forme d'une plaque 1210 présentant deux chants opposés 1201, 1202 s'étendant transversalement vis-à-vis du reste de la plaque 1200, lesdits chants opposés 1201, 1202 présentant chacun au moins une ouverture formant les zones d'appui 125, 126 pour les premier et deuxième organes d'appui 135, 136 du montant latéral 130, 131 respectif.

En outre, dans ce troisième mode de réalisation, le deuxième élément support 124 est fixé, ici comme montré sur la figure 5B, par trois vis, au premier et au deuxième montant latéral 131, 132.

Bien entendu, en variante, il est parfaitement envisageable, ceci sans que l'on sorte du cadre de l'invention, que chaque premier et deuxième montant 131, 132 présente au moins un troisième organe d'appui sur lequel le deuxième élément de support 124 est en appui. Selon cette possibilité, le deuxième élément de support 124 présente, d'une manière similaire au premier élément de support 120, pour chaque troisième organe d'appui une zone d'appui complémentaire en forme audit troisième organe d'appui.

Un appareil de cuisson 100 selon ce troisième mode de réalisation peut être fabriqué à partir d'un procédé de fabrication se différenciant du procédé de fabrication selon le troisième mode de réalisation en ce que :
- lors de l'étape de fourniture du premier élément de support 120, celui-ci comprend uniquement une première surface de support 121 et ne comprend pas de deuxième surface de stockage 122,
- il est prévu une étape de fourniture d'un deuxième élément support 124 conformé pour supporter le ou les récipients 200 en dehors des périodes de cuisson, ledit deuxième élément de support 124 étant fixé aux premier et deuxième montants latéraux 131, 132,
- lors de l'étape de fourniture des premier et deuxième organes d'appui 135, 136 pour chaque montant latéral 131, 132, le premier et le deuxième organe 135, 136 d'appui du premier montant latéral 131 sont indépendants des premier et deuxième organes d'appui 135, 136 du deuxième montant latéral 132 et sont formés par embossages.

La figure 6 illustre un appareil de cuisson 100 selon un quatrième mode de réalisation dans lequel chaque montant latéral 131, 132 comprend un unique premier organe d'appui 135.

Un appareil de cuisson 100 selon ce quatrième mode de réalisation se différencie d'un appareil de cuisson 100 selon le deuxième mode de réalisation en ce qu'il est prévu en lieu et place des premier et deuxième organes d'appui 135, 136 du premier et du deuxième montant latéral 131, 132 des uniques premiers organes d'appui 135 de respectivement le premier et le deuxième montant latéral 131, 132. Selon ce quatrième mode de réalisation, chaque premier organe d'appui 135 s'étend latéralement sur au moins une moitié de la largeur du montant latéral 131, 132 correspondant.

D'une manière similaire au deuxième mode de réalisation, le premier élément de support 120, présente sur les chants opposés 1221, 1222 de deuxième surface de stockage 1220 les zones d'appui 125, 126 qui sont fournies par une ouverture allongée s'étendant sur une partie majoritaire du chant opposé 1221, 1222 correspondant. Conformément à l'invention, cette ouverture allongée présente une forme complémentaire au premier organe d'appui 135 correspondant.

Un tel appareil de cuisson 100 peut être fabriqué au moyen d'un procédé de fabrication se différenciant d'un procédé de fabrication d'un appareil de cuisson selon le deuxième mode de réalisation en ce que lors de l'étape de fourniture des premier et deuxième organe d'appui 135, 136 il est fourni en lieu et place des premier et deuxième organes d'appui 135, 136 du premier et du deuxième montant latéral 131, 132 des uniques premiers organes d'appui 135 de respectivement le premier et le deuxième montant latéral 131.

On notera que, bien entendu, les premier au quatrième modes de réalisation décrits ci-dessus peuvent être combinés entre eux sans que l'on sorte du cadre de l'invention. En particulier, il est parfaitement envisageable de prévoir un appareil de cuisson 100 comprenant un premier organe d'appui 135 conforme à l'un parmi les premier au troisième modes de réalisation avec un deuxième organe d'appui 136 d'un autre parmi les premier au troisième modes de réalisation. On peut ainsi, par exemple, prévoir un premier organe d'appui 135 commun entre le premier et deuxième montant 131, 132, sous forme d'une traverse, en combinaison avec un deuxième organe d'appui 136 indépendant aménagé sur chacun du premier et du deuxième montant 131, 132 par exemple par embossage.

De même s'il est prévu dans les modes de réalisation ci-dessus au maximum deux organes d'appui 135, 136 associés à chacun des premier et deuxième montants latéraux 131, 132, il est également envisageable, sans que l'on sorte du cadre de l'invention, que chaque montant 131, 132 comprennent trois organes d'appui, ceci notamment lorsque le premier élément de support 120 doit supporter un nombre important de récipients 120, par exemple six ou plus. De même, s'il est préférable que le premier et deuxième montant latéral 131, 132 comprennent un même nombre d'organes d'appui 135, 136 identiques, il est parfaitement envisageable que les premier et deuxième montants latéraux 131, 132 présentent des configurations distinctes, le premier montant latéral 131 présentant par exemple un premier et un deuxième organe d'appui 135, 136 alors que le deuxième montant latéral 132 présente un unique premier organe d'appui 135, ceci sans que l'on sorte du cadre de l'invention.

## Revendications

1. Appareil de cuisson (100) pour cuire des aliments contenus dans au moins un récipient (200) de cuisson comprenant :
- au moins un système de chauffage (110) radiant, tel qu'une résistance électrique,
- au moins un premier élément de support (120) conformé pour supporter le ou les récipients (200) pendant la cuisson des aliments, le premier élément de support (120) étant agencé en regard du système de chauffage (110) de telle manière que le ou les récipients, et les aliments qui y sont contenus, supportés par ledit au moins un premier élément de support puissent être soumis au système de chauffage (110),
- au moins un premier et un deuxième montants latéraux (131, 132) agencés parallèles l'un à l'autre et sur lesquels sont montés le système de chauffage (110) et l'au moins un premier élément de support (120),
l'appareil de cuisson (100) **étant caractérisé en ce que** le premier et le deuxième montant latéral (131, 132) comprennent chacun au moins un premier organe d'appui (135, 136) sur lequel l'au moins un premier élément de support (120) est en appui, ledit au moins un premier élément de support (120) présentant pour chaque, au moins un premier organe d'appui (135, 136) une zone d'appui (125, 126) complémentaire en forme audit au moins un premier organe d'appui (135, 136).

2. Appareil de cuisson (100) selon la revendication 1, dans lequel le premier et le deuxième montant latéral (131, 132) comprennent chacun en outre un deuxième organe d'appui (136) sur lequel l'au moins un premier élément de support (120) est en appui, ledit au moins un premier élément de support (120) présentant pour chacun desdits deuxième organes d'appui (136) une zone d'appui (126) complémentaire en forme dudit deuxième organe d'appui (136).

3. Appareil de cuisson (100) selon la revendication 2, dans lequel, au moins l'un du premier et du deuxième organe d'appui (135, 136) est commun entre le premier et le deuxième montant latéral (131, 132) et est formée par une traverse (135A, 136A).

4. Appareil de cuisson (100) selon la revendication 2 ou 3, dans lequel au moins un organe d'appui (135, 136) sélectionné parmi le premier et le deuxième organe d'appui (135, 136) du premier et du deuxième montant latéral (131, 132) présente une section, selon un plan sensiblement parallèle au montant latéral (131, 132) correspondant, comprenant une portion de cercle, ladite portion correspondant préférentiellement à un demi-cercle, voire à un cercle complet.

5. Appareil de cuisson (100) selon l'une quelconque des revendications 2 à 4, dans lequel au moins un organe sélectionné parmi le premier et le deuxième organe d'appui (135, 136) du premier et du deuxième montant latéral (131, 132) présente une section, selon un plan sensiblement parallèle au montant correspondant, en parallélogramme, voire rectangulaire ou encore carrée.

6. Appareil de cuisson (100) selon l'une quelconque des revendications 1 à 5, dans lequel le premier et le deuxième organe d'appui (135), 136) de chaque premier et deuxième montant latéral (131, 132) sont reliés l'un à l'autre par un élément de cadre (139).

7. Appareil de cuisson (100) selon la revendication 1, dans lequel chacun de l'au moins un premier organe d'appui (135) s'étend latéralement sur au moins une moitié de la largeur du montant latéral (131, 132).

8. Appareil de cuisson (100) selon l'une quelconque revendication 2 ou 7, dans lequel pour le premier et le deuxième montant latéral (131, 132) au moins un organe d'appui (135, 136) parmi le premier organe d'appui (135) et l'éventuel deuxième organe d'appui (126) est indépendant dudit organe d'appui (135, 136) correspondant de l'autre montant (131, 132) parmi le premier et deuxième montant latéral (131, 132), l'au moins un organe d'appui (135, 136) parmi le premier organe d'appui (135) et l'éventuel deuxième organe d'appui (126) étant de manière particulièrement avantageuse formé par embossage d'une paroi du montant latéral (131, 132) correspondant.

9. Appareil de cuisson (100) selon l'une quelconque des revendications 1 à 8, dans lequel l'au moins un premier élément support (120) comprend une première surface de support (121) conformée pour supporter le ou les récipients (200) pendant la cuisson des aliments et une deuxième surface de stockage (122) conformée pour supporter le ou les récipients (200) en dehors des périodes de cuisson,
dans lequel la deuxième surface de stockage (122) présente préférentiellement les zones d'appui (125, 126).

10. Appareil de cuisson (100) selon la revendication 9, dans lequel l'au moins un premier élément de support (120) comprend un élément de liaison (123) conformé pour lier l'un à l'autre la première surface de support (121) et la deuxième surface de stockage (122).

11. Appareil de cuisson (100) selon la revendication 1 à 8, comprenant en outre un deuxième élément support (124) conformé pour supporter le ou les récipients (200) en dehors des périodes de cuisson,
chaque premier et deuxième montant présente au moins un troisième organe d'appui (137) sur lequel le deuxième élément de support (124) est en appui, ledit deuxième élément de support (124) présentant pour chaque troisième organe d'appui (137) une zone d'appui (127) complémentaire en forme audit troisième organe d'appui (137).

12. Appareil de cuisson (100) selon la revendication 1 à 8, comprenant en outre un deuxième élément support (124) conformé pour supporter le ou les récipients (200) en dehors des périodes de cuisson,
dans lequel le deuxième élément de support (124) est fixé aux premier et deuxième montants latéraux (131, 132), ladite fixation étant préférentiellement une fixation par vis.

13. Appareil de cuisson (100) selon l'une quelconque des revendications 1 à 12, dans lequel l'au moins un premier élément de support (120) comprend une plaque (1200, 1210, 1220) présentant deux chants opposés (1201, 1202, 1211, 1212, 1221, 1222) s'étendant transversalement vis-à-vis du reste de la plaque (1200, 1210, 1220), lesdits chants opposés (1201, 1202, 1211, 1212, 1221, 1222) présentant chacun au moins une ouverture formant les zones d'appui (125, 126) pour les premier et deuxième organes d'appui (135, 136) du montant latéral (130, 131) respectif.

14. Appareil de cuisson (100) selon l'une quelconque des revendications 1 à 13 comprenant en outre au moins un capteur (111) adapté pour détecter lorsque le premier élément de support (120) est agencé en appui avec un premier organe d'appui (135, 136) d'au moins l'un parmi le premier et le deuxième montant latéral (131, 132) et dans lequel l'appareil de cuisson (100) est en outre configuré pour éteindre le système le chauffage (110) en l'absence de détection par l'au moins un capteur (111) de l'agencement du premier élément de support (120) en appui avec un premier organe d'appui (135, 136) d'au moins l'un parmi le premier et le deuxième montant latéral (131, 132),
dans lequel l'au moins un capteur (111) comprend préférentiellement un interrupteur qui est agencé de de telle manière à être :
- dans une première position lorsque le premier élément de support (120) est agencé en appui avec le premier organe d'appui (135, 136) d'au moins l'un parmi le premier et le deuxième montant latéral (131, 132) et,
- dans une deuxième position en en l'absence d'un tel appui du premier élément de support (120) avec le premier organe d'appui (135, 136) d'au moins l'un parmi le premier et le deuxième montant latéral (131, 132),
ledit interrupteur étant conformé pour autoriser l'alimentation du système de chauffage (110) uniquement lorsqu'il est dans la première position.

15. Kit de cuisson (10) d'aliments comprenant :
- un dispositif de cuisson (100) selon l'une quelconque des revendications 1 à 14,
- au moins un récipient (200) de cuisson destiné à contenir des aliments à cuire.

16. Procédé de fabrication d'un appareil de cuisson (100) pour cuire des aliments contenus dans au moins un récipient (200) de cuisson, le procédé comprenant les étapes suivantes :
- fourniture d'au moins un système de chauffage (110) radiant, tel qu'une résistance électrique,
- fourniture d'au moins un premier élément de support (120) conformé pour supporter le ou les récipients (200) pendant la cuisson des aliments,
- fourniture d'au moins un premier et un deuxième montant latéral (131, 132) agencés parallèle l'un à l'autre,
- montage du système de chauffage (110) sur les premier et deuxième montants latéraux (131, 132),
- fourniture pour chacun des premier et deuxième montants latéraux (131, 132) d'au moins un premier et organe d'appui (135, 136), l'au moins un premier élément de support (120) présentant pour chaque premier organe d'appui (131, 132) une zone d'appui (121, 122) complémentaire en forme audit premier organe d'appui (131, 132),
- agencement l'au moins un premier élément de support (131, 132) en appui de chacun des au moins un premier organe d'appui (131, 132), le premier élément de support (120) étant alors agencé en regard du système de chauffage (110) de telle manière que le ou les récipients (200), et les aliments qui y sont contenus, qui sont supportés par ledit au moins un premier élément de support puissent être soumis au système de chauffage (110).
